(19) Europäisches Patentamt
European Patent Office
Office européen des brevets

(11) Publication number: **0 286 336 B1**

(12) **EUROPEAN PATENT SPECIFICATION**

(45) Date of publication of patent specification: **09.10.91 Bulletin 91/41**

(51) Int. Cl.[5]: **C23F 11/14**, C23F 11/12, E21B 41/02

(21) Application number: **88302977.9**

(22) Date of filing: **31.03.88**

(54) **Corrosion inhibitors.**

(30) Priority: **02.04.87 GB 8707872**

(43) Date of publication of application: **12.10.88 Bulletin 88/41**

(45) Publication of the grant of the patent: **09.10.91 Bulletin 91/41**

(84) Designated Contracting States: **BE DE FR GB IT NL**

(56) References cited:
**DE-A- 1 901 257**
**Patent abstracts of Japan, unexamined applications, C field, vol. 5, no. 4, January 13, 1981, THE PATENT OFFICE JAPANESE GOVERNMENT page 38 C 38**

(73) Proprietor: **EXXON CHEMICAL PATENTS INC.**
**1900 East Linden Avenue**
**Linden New Jersey 07036 (US)**

(72) Inventor: **Haslegrave, John Anthony**
**6 Eason Drive Abingdon**
**Oxfordshire OX14 3YD (GB)**
Inventor: **McDougall, Lee Allen**
**6202 Rollingbrook Drive**
**Houston Texas 77096 (US)**

(74) Representative: **Barlow, Roy James et al**
**J.A. KEMP & CO. 14, South Square, Gray's Inn**
**London WC1R 5EU (GB)**

EP 0 286 336 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to corrosion inhibitors.

There are situations where it is desirable or necessary for a corrosion inhibitor to be in a form where it is slowly released into the surrounding environment. One such situation is the hydraulic fracturing operation in the recovery of oil and gas from underground geological formations.

The recovery of oil and gas from underground geological formations is of great importance in modern society, which uses vast amounts of fossil fuels for its essential energy. The individual well productivity declines over a period of time because of a number of factors, including changes in reservoir fluid characteristics, depletion of reservoir fluid depletion of reservoir energy, decreasing permeability of the formation to the oil, the gradual dissipation of the expanding pressure transient, contamination of the well bore, reduced permeability of the oil through the region immediately surrounding the well bore and reduction of the internal diameter of the well pipe, e.g. due to the deposition of paraffin or scale.

The response to the declining productivity was the development of numerous techniques, which have become collectively known as well workover and stimulation. The concept of fracturing or formation breakdown has been recognized to play a very important role in the application of these oil production enhancement techniques, including stimulation, acidizing, water injection and cementing of the formation.

Hydraulic fracturing has found wide usage as a well stimulation procedure for creating deep-penetrating fractures (both horizontal and vertical) that provide high capacity channels for flow from deep within the producing formation to the well for overcoming damaged matrix permeability surrounding a wellbore. In order to produce gas or liquids from a well at a higher rate following a hydraulic fracturing treatment, the reservoir must contain enough fluids in place and the formation must not have regions of severe permeability reduction, particularly in regions adjacent to the well. Early experimental work in shallow wells demonstrated that a hydraulically formed fracture tends to heal — that is, to lose its fluid carrying capacity after the parting pressure is released — unless the fracture is propped. Typical propping agents for retaining the integrity of the fractures are nutshells, plastic beads, aluminium spacers, glass beads, sand and urea prills.

Proppants thus provide a means for meeting the objective of the fracturing which is to increase the well production by preventing collapse of the formation and resultant decrease in fluid permeability.

It is common practice to fracture oil wells using a water-based brine fluid containing a water-soluble polymer such as hydroxypropyl guar cross-lined with a transition metal salt as is well-known in the art.

Traditionally, the introduction of reagents downhole during fracturing and other well stimulation processes is carried out by forcing a solution of the reagent down the hole and into the formation, whereupon it becomes absorbed onto the formation and released slowly from it. Unfortunately, the rate of release is variable and generally is quite fast. This has become known as treatment by the "squeeze" technique.

It is known to force plastic beads of ethylene-vinyl acetate copolymers into the formation, but these beads are generally too large to get into the fractures formed in the formation since smaller beads would dissolve too rapidly. Further, the beads are too soft for the proppant function.

It is also known to disperse paraffin inhibitors on a bead for the purpose of placing the paraffin inhibitor in the formation during a hydraulic fracturing operation, so that the paraffin inhibitor is gradually released into the product fluid stream. So far it has been difficult to disperse corrosion inhibitors in a bead because their cationic nature presents even distribution during the bead formation reaction. This results in sticky, low activity beads with the inhibitor absorbed on the outside of the bead rather than being dispersed throughout the bead. EP-A-193369 describes solid polymeric bodies comprising a polymer matrix containing a water-soluble reagent such as a corrosion inhibitor, and exemplifies the use of an imidazoline quaternary salt of an equimolar reaction product of tall oil fatty acid and diethylene triamine. US-A-4560497 describes corrosion inhibitors for use in secondary recovery methods which are obtained by reading a maleinised polymeric fatty acid (i.e. a tetra-carboxylic acid), a poly(oxyalkylene) glycol or alkoxypoly (oxyalkylene) glycol and a nitrogen-containing compound to form amide esters (though described in the patent as "amino esters") and amino-amide esters. For each mole of fatty acid a total of one mole of glycol and nitrogen-containing compound is utilised so that if a polyamine is employed the product will contain unblocked amine groups.

We have now discovered a form of corrosion inhibitor which overcomes these difficulties. According to this invention a corrosion inhibiting composition comprises the product (X) obtainable by reacting propylene oxide or a butylene oxide with the free amine groups of a product (Y). Free, or unblocked, amino groups are primary or secondary amino groups, and reaction with propylene oxide or butylene oxide replaces the hydrogen atoms of those groups with a hydroxypropyl or hydroxybutyl group or a polymeric chain to form blocked or tertiary amino group. Product (Y) is obtainable by reacting a polyamine with a carboxylic acid, a carboxylic acid anhydride or an ester of a carboxylic acid. In accordance with this invention product (X) also has to be supported on or dispersed in a support.

Product (X) (which in accordance with this invention has to be supported on or dispersed in a support) will be described in terms of the above method of making it. However it is to be understood that the scope of this invention is not limited to this particular method of manufacture ; as long as a compound is, or a mixture of compounds contain a compound which is, capable of being made in the way defined then said compound or mixture of compounds is within the scope of this invention.

Although product (X) may be derived from a butylene oxide, e.g. isobutylene oxide, it is preferred that product (X) be derived from propylene oxide. To obtain product (X) the epoxide is reacted with an amido-amine — reaction product (Y). This amido-amine is obtained by reacting a polyamine with a carboxylic acid, a carboxylic acid anhydride or an ester of a carboxylic acid.

The polyamines from which reaction product (Y) is derived include those of the general formula

$$H_2N[(CR^1R^2)_xNH]_yH$$

where $R^1$ and $R^2$ are hydrogen or alkyl groups, x and y are integers. It is preferred that $R^1$ and $R^2$ are both hydrogen atoms, but if desired $R^1$ can be hydrogen and $R^2$ an alkyl group, for example a $C_1$ to $C_{10}$ alkyl group such as methyl, propyl or n-butyl.

It is preferred that x be at least two, e.g. between 2 and 6. Especially preferred is the case where x is 2, i.e. the polyamine is a polyethylene amine. It is also preferred that y is between 1 and 10 for example between 3 and 6.

Especially preferred polyamines are ethylene diamine (EDA), diethylene triamine (DETA) and tetra ethylene pentamine (TEPA).

The reaction product Y is derived from a carboxylic acid, a carboxylic acid anhydride or an ester of a carboxylic acid. Although the carboxylic acid can be of any chain length it is preferably one having 6 to 50, especially 10 to 25 carbon atoms per molecule. Although di- and tri-carboxylic acids can be used the acid is preferably a monocarboxylic acid. The carboxylic acid is preferably an aliphatic carboxylic acid, especially a $C_{10}$ to $C_{25}$ aliphatic carboxylic acid, having for example $C_{11}$ to $C_{31}$ carbon atoms per molecule. The acid can be a saturated acid or an unsaturated acid.

Examples of suitable aliphatic carboxylic acids (fatty acids) include hexoic acid, n-nonanoic acid, n-decanoic acid, lauric acid, myristic acid, palmitic acid, stearic acid and behenic acid. Suitable unsaturated carboxylic acids include oleic acid, palmitoleic acid, linoleic acid, linolenic acid, erucic acid, lauroleic acid, myristoleic acid, palmitoleic acid and gadoleic acid. Suitable examples of dibasic carboxylic acids include pimelic acid, sebasic acid, brassylic acid and dimerised or trimerised fatty acids such as dimerised higher carboxylic acids of the aliphatic fatty acid type. Examples of suitable aralkyl acids are diphenyllauric acid, triphenyl palmitic acid and phenylstearic acid.

The higher carboxylic acids of the aliphatic fatty acid type can include acids derived from animal or vegetable fats and oils and tall oil acids. A particularly useful and preferred acid mixture for reaction with multiamine is tall oil fatty acid obtained from tall oil. Tall oil is a mixture of rosin and fatty acids released by acidulation of the black liquor soap skimmed off the black liquor from the sulphate process in the manufacture of Kraft paper. Crude tall oil is commonly fractionally distilled to provide various cuts wherein the ratio of fatty acids to rosin acids varies from 1 : 99 to 99 : 1. Tall oil fatty acid usually includes tall oil compositions having a fatty acid content of at least about 50% by weight, the balance being mainly rosin acids in admixture with minor amounts of unsaponifiable materials of unknown chemical composition. The fatty acids in tall oil fatty acids consist mainly of oleic, linoleic, conjugated linoleic, palmitic, stearic, palmitoleic, arachidic and behenic acids. Tall oil fatty acids which are commercially available include those having fatty acid content in a range of about 50 to about 98 percent by weight with the total fatty acid content being divided into the following compositions : palmitic (0.1-5.3%) ; palmitoleic (0-2.1%) ; stearic (2.1-2.6%) ; oleic (39.3-49.5%) ; linoleic (38.1-45.1%) ; eicosanoic (0-1.9%) ; eicosadienoic (0-3.2%) ; eicosatrienoic (0-2.9%) ; and behenic (0-0.9%) acids, with the balance being rosin acids, unidentified acids and unsaponifiable materials.

Instead of a carboxylic acid a carboxylic acid anhydride may be used and suitable anhydrides are anhydrides of the above mentioned carboxylic acids.

Instead of a carboxylic acid one could use the corresponding ester. Alkyl esters are particularly suitable, e.g. esters derived from $C_1$ to $C_{20}$ alcohols, for example the methyl, ethyl, n-propyl, n-hexyl, n-dodecyl, n-tetradecyl or n-octadecyl esters. One class of esters which could be used are the naturally occurring oils which are mainly the triglycerides of various acids such as lauric, oleic, myristic, palmitic, stearic etc. Oils such as linseed, olive, palm and coconut oil could be used.

The ratio between the carboxylic acid, anhydride or ester and the polyamines can vary but generally speaking the mole ratio of carboxylic group (or derivative thereof) to nitrogen atom in the polyamine should be in the range between 0.1 and 1.0 and preferably in the range 0.3 to 0.9.

The ratio between propylene oxide or the butylene oxide and the nitrogen in the amine groups of the amido-amine (Product Y) can also vary but usually it is between 1 and 10, e.g. 1 to 5 moles of epoxide per mole of amido-amine, multiplied by the number of hydrogen atoms attached to amino groups in the amido-amine.

Suitable reaction conditions for the first reaction (polyamine reacted with acid, anhydride or ester) are : temperature within the range of 35°C to 260°C, preferably from 120°C to 200°C, for a time of 1 to 16 hours, preferably 4 to 9 hours which can be carried out at atmospheric pressure or above, but is generally conducted at 100 to 500 kPa when no diluent is present. If a diluent is employed the pressure is usually that produced by the vapor pressure of the diluent at the temperature employed. It is also preferable to utilize an inert atmosphere such as nitrogen over the reaction mixture.

When for example TEPA is used a mole ratio of about 3 moles of acid, e.g. tall oil fatty acid or stearic acid, per mole of the polyamine is desirable. A reaction temperature in the range of about 125°C to about 190°C under a pressure of 0.1 to 1 atm facilitates the removal of water with the reaction terminated when about one mole of water per mole of acid reactant is collected. Sparging the reaction mixture with an inert gas has also been found to be beneficial. The reaction may be carried out in the absence or presence of an aromatic solvent to aid removal of water by azeotropic distillation.

The second reaction, i.e. reacting Product Y with the propylene oxide or butylene oxide, is usually conducted under conditions of elevated temperature and pressure. Reaction of the alkylene oxide with the amino groups in the amido-amine is carried out without a catalyst. If it is desired to build chains or alkylene oxide adducts, then these reactions are carried out in the presence of a catalyst containing alkali metal, such as sodium in a compound such as sodium hydroxide or sodium methoxide. The reaction conditions are not critical but usually will fall within a temperature range of 100°C to 175°C and pressure within the range of 130 to 1100 kPa.

The structure of Product (X) can vary and is dependent on the nature of the polyamine and carboxylic acid, carboxylic acid anhydride or ester and on the reaction conditions. Product (X) will often be a mixture of compounds. However always present will be a compound containing (1) an amide group and (2) attached to an amino group a hydroxypropyl or a hydroxbutyl group or polymeric chain derived from propylene oxide or butylene oxide such that there are no primary or secondary amino groups with free hydrogen atoms.

Typical structures are as follows :

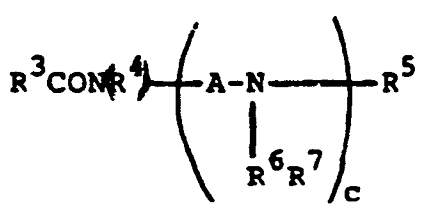

(1)

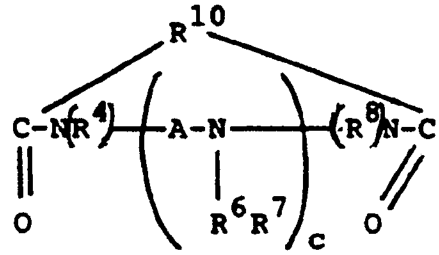

(2)

(3)

and 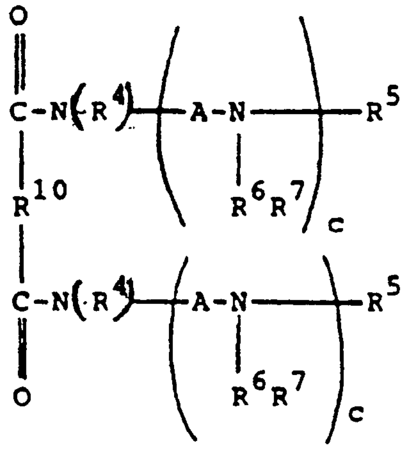

wherein

- $R^3$ is a hydrocarbyl, e.g. alkyl, group ;
- $R^4$ is hydrogen or a hydrocarbyl, e.g. alkyl, group ;
- A is a hydrogen- and carbon- containing, e.g. alkylene, group ;
- $R^5$ is $—R^6R^7$, a hydrocarbyl, e.g. alkyl group or the amide unit $—B\text{-}R^8NOCR^9$ ;
- $R^6$ is $—(OC_3H_6)a—$ or $—(OC_4H9)_b—$ ;
- $R^7$ is hydrogen or a hydrocarbyl, e.g. alkyl, group ;
- B is a hydrogen- and carbon-containing, e.g. alkylene, group ;
- $R^8$ is hydrogen or a hydrocarbyl, e.g. alkyl, group,
- $R^9$ is a hydrocarbyl, e.g. alkyl, group ;
- $R^{10}$ is a hydrogen- and carbon-containing, e.g. alkylene, group ;

and a, b and c are integers.

It is to be understood that the term hydrocarbyl includes substituted hydrocarbyl, e.g. by halogen atoms. Formulae (2) and (3) represent compounds derived from a dibasic carboxylic acid.

Preferred structures derived from monocarboxylic acids are those where $R^5$ is $—B\text{-}R^8NOCR^9$. Thus, using propylene oxide and diethylene triamine (DETA) or tetraethylene pentamine (TEPA) preferred structures have the formulae

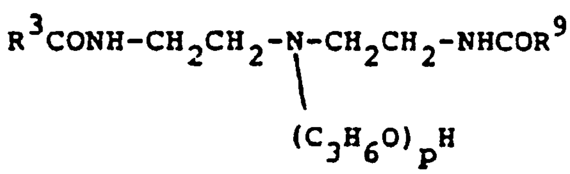

and

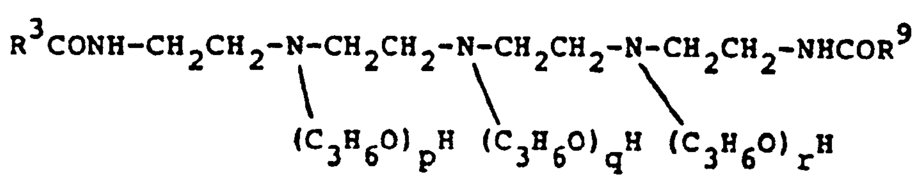

where p, q and r are integers, preferably 1 to 5.

It is preferred that Product (X) should be a solid at ambient temperature. For this reason the carboxylic acid, anhydride or ester and polyamine and the number of moles of propylene oxide or butylene oxide reacted with Product (Y) (the amido-amine) should be selected so as to produce a solid product.

Product (X) has to be supported on or dispersed in a support or be encapsulated. This support can take

various forms, for example silica, alumina,... but is preferably a solid polymeric matrix which can be permeated by Product (X), so that Product (X) is supported on or dispersed in the matrix. It is desirable that the support, e.g. polymeric matrix, has a softening point substantially above the temperature of the fluid in which it is to be employed.

The support, e.g. polymeric matrix, preferably has a softening point as measured by a temperature-graded hot bar of above 30°C and most preferably is above 60°C, often up to 120°C. The combination of Product (X) and the support must be such that the reagent is releasable into surrounding fluid at the desired time and rate either as a result of the fluid permeating through the support to dissolve Product (X) or as a result of Product (X) permeating through the support to dissolve into the fluid, or both.

The solid polymeric bodies may consist solely of a solid polymeric matrix containing Product (X) or may contain a region, generally an outer region, of polymeric material having a lower rate of permeation of Product (X) than that of the interior region and substantially free of Product (X). The polymer of such an outer region or shell may be of the same material as the interior region matrix or may be different, and will be selected having regard to the release properties required from the polymeric bodies. The matrix containing Product (X) may be of uniform composition throughout its body or its composition may vary, for instance having a different polymer composition in its outermost portions from its core portion. By appropriate selection of the polymeric materials for forming the bodies and the distribution of reagent within the bodies, it is possible to control the rate and duration of release of Product (X) into the fluid containing condensed water while retaining the physical (structural) integrity of the polymeric matrix.

It is this permeativity which makes possible the transfer of Product (X) from the body which is insoluble in the fluid into the fluid containing condensed water that is in contact with the surface of the body. During and after the leaching of Product (X) from the permeative matrix of the body, the insoluble polymeric matrix retains its structural integrity.

The polymeric bodies are preferably particles. The particle size is generally at least 10 microns and preferably at least 50, and usually at least 100 microns, since small particles can be difficult to handle and to position permanently in their desired environment. The particle size is generally less than 2 mm and preferably less than 1 mm, since large particles also may be difficult to position in their desired environment. Best results are generally obtained with a particle size of from 50 microns to 1 mm. The particles may have irregular shape and sizes, for instance, as a result of having been made by crushing, but preferably the particles are of substantially spherical or other uniform shape.

When being used in fracturing, the particles, preferably, have a size and hardness and/or resistance to flow such that they can be used in sand packing and will not be significantly degraded by the sand. The particle size distribution will be selected so that a pack of controlled permeability to fluid flow is formed and such that the particles have a controlled leach rate as set forth earlier.

The method of making the bodies of a fluid containing condensed water-insoluble polymeric matrix containing Product (X) involves forming a dispersion of Product (X) and liquid polymerizable material and polymerizing the polymerizable material while maintaining the particles dispersed in the medium. The polymerization results in the formation of a suspension of polymer beads each containing Product (X). The beads may be filtered or otherwise separated from the hydrophobic medium. They may be washed and dried, but for introduction by means of an aqueous fluid or into an aqueous fluid the beads are best left in a damp and water-wetted state.

In order to obtain uniform and fine distribution of Product (X) in the polymeric matrix, it is necessary for Product (X) to be monomer-soluble rather than hydrophobic medium soluble and preferably Product (X) is in liquid form during polymerization of the matrix.

The softening point of Product (X) should be above ambient temperatures encountered in use. The amount of Product (X) supported on or dispersed in the support can vary, but is preferably between 5 and 50 weight %, for example between 10 and 30 weight %.

The invention has widely diverse applications since it makes possible a controlled release of Product (X) into fluids containing condensed water (such as crude oil, wet natural gas, and formation water which includes both connate and injected) in a uniform manner and over extended time periods. It makes possible the release of a corrosion inhibitor from previously non- or difficultly accessible and diverse points such as in an oil bearing mineral formation one or more miles underground.

This invention provides a method for the controlled introduction of a corrosion inhibitor into an environment containing condensed water this method comprising placing solid bodies, each body comprising the corrosion inhibiting composition of this invention in said environment ; and leaching out Product (X) from said bodies at a controlled and predetermined rate into the water of said environment.

Thus corrosion of metal contacting a fluid containing condensed water and located in an underground geological formation may be prevented by depositing solid polymeric particulate bodies comprising the corrosion inhibiting compositions of this invention downhole in the fluid producing region of the formation in an

amount sufficient to alter the corrosive properties of said fluids ; flowing said fluid to the earth's surface through said bodies in a contiguous manner thereby leaching Product (X) into said fluid ; and, recovering said fluid modified by the presence of an active amount of Product (X). This preferred method is at times usefully modified by the additional steps of interrupting the flow of said fluid from the formation to the earth's surface, depositing said bodies by means of a viscosified stimulation fluid containing at least one component reactive with Product (X) and thereafter resuming the flow of said fluid to the earth's surface.

The invention is now illustrated by the following Examples.

## Example 1

Three amido-amines were prepared. Compound 1 was the reaction product of diethylene triamine (DETA) with oleic acid in a molar proportion 1 : 2 respectively. Compound 2 was the reaction product of DETA with tall oil fatty acid (TOFA) in a molar proportion 1 : 2 respectively. Compound 3 was the reaction product of tetraethylene pentamine and stearic acid in a molar proportion of 1 : 3 respectively.

In the reactions the reactants dissolved in xylene were heated to 130° to 150°C for approximately 6 hours under atmospheric pressure in an inert nitrogen atmosphere.

Each of Compounds 1 and 2 dissolved in xylene were then reacted with propylene oxide (PO) in a mole ratio of 1 : 1 to produce respectively Compounds 4 and 5. Compound 3 dissolved in xylene was reacted with propylene oxide in a mole ratio of 1 : 2 to produce Compound 6. In these reactions the reactants were heated to 135°C for 2 to 3 hours under a pressure of 5-6 atmospheres. Compounds 4, 5 and 6 were found to be waxes at ambient temperature at 85% by weight concentration in xylene.

Another propoxylated amido-amine was prepared in a similar manner by reacting DETA with a mixture of oleic and stearic acids in a mole ratio of 1 : 1 : 1 and reacting the amido-amine with propylene oxide (PO) in a mole ratio of 1 : 1 to produce Compound 7.

Compounds 3, 4, 5, 6 and 7 were then subjected to the corrosion wheel test, details of which are as follows:

## Test Method

For each compound three mild steel coupons (approximately 100 mm × 12 mm × 1.5 mm) were tested at each concentration. Each was contacted in a 250 ml bottle with 200 ml of a test fluid either saturated with a carbon dioxide at 20°C or containing 100 ppm hydrogen sulphide or having both $CO_2$ and $H_2S$ present in those amounts. The test fluid was treated with a 30% aqueous solution of the compound under test at 2, 10, 50 and 250 ppm except where indicated to the contrary. The coupon was subjected to a dynamic wheel test in which the bottle was mounted radially on the periphery of 650 mm diameter wheel which was rotated at about 40 rpm for 24 hours at 70°C. The weight loss was obtained, and also measured in a control experiment where no inhibitor was present. From this the % protection was calculated as % reduction in weight loss.

The results for a sweet environment and for a sour environment are shown in Tables 1 and 2 respectively.

From a comparison of the results with Compounds 3 and 6 it can be seen that maximum protection values are equivalent at higher treat rates with a more rapid response at lower treat rates with Compound 3.

TABLE 1

CORROSION WHEEL TEST ON PROPOXYATED AMIDO-AMINES

| Compound | Amine | Acid (moles) | P.O. (moles) | % Protection at (ppm) 2 | 5 | 10 | 20 | 50 | 100 | 200 |
|---|---|---|---|---|---|---|---|---|---|---|
| 7 | DETA | oleic/stearic (2) | 1 | 5 | 11 | 31 | 64 | 68 | 69 | 76 |
| 6 | TEPA | stearic (3) | 2 | 8 | 11 | 33 | 59 | 66 | 68 | 68 |
| 4 | DETA | oleic (2) | 1 | 10 | 14 | 18 | 37 | 69 | 69 | 74 |
| 5 | DETA | TOFA (2) | 1 | 8 | 25 | 28 | 40 | 72 | 72 | 74 |
| 6* | TEPA | stearic (3) | 2 | 21 | 26 | 26 | 51 | 66 | 67 | 71 |
| 3 | TEPA | stearic (3) | - | 10 | 35 | 52 | 61 | 70 | 76 | 77 |

Blank Weight Loss: 26.7 ± 0.2 mg

Test Conditions:
- Temperature: 70°C
- Duration: 24 hrs
- Fluids: 50-50 3% NaCl brine - Mentor 28 (a kerosene)
- Corrosives: Saturated $CO_2$ only
- Replicates: Duplicates + triplicate blanks

* Compound 6: 2nd batch

TABLE 2

CORROSION WHEEL TEST ON PROPOXYATED AMIDO-AMINES

| Compound | Amine | Acid (moles) | P.O. (moles) | % Protection at (ppm) | | | | | | |
|---|---|---|---|---|---|---|---|---|---|---|
| | | | | 2 | 5 | 10 | 20 | 50 | 100 | 200 |
| 7 | DETA | oleic/stearic (2) | 1 | 4 | 22 | 62 | 77 | 88 | 90 | 93 |
| 6 | TEPA | stearic (3) | 2 | 4 | 26 | 49 | 76 | 83 | 86 | 91 |
| 4 | DETA | oleic (2) | 1 | - | 25 | 57 | 72 | 84 | 86 | 87 |
| 5 | DETA | TOFA (2) | 1 | 1 | 25 | 53 | 68 | 83 | 85 | 85 |
| 6* | TEPA | stearic (3) | 2 | - | 12 | 37 | 47 | 65 | 84 | 86 |
| 3 | TEPA | stearic (3) | - | - | 15 | 57 | 61 | 68 | 86 | 86 |

Blank Weight Loss: 36.3 ± 2.9 mg

Test Conditions:

Temperature: 70°C
Duration: 24 hrs
Fluids: 50-50 3% NaCl brine - Mentor 28 (a kerosene)
Corrosives: Saturated $CO_2$ + 100 ppm $H_2S$
Replicates: Duplicates + triplicate blanks

* Compound 6: 2nd batch

Example 2

Compound 6 of Example 1 (TEPA/3 moles stearic acid/2 moles PO) was used to prepare beads by adding it to the monomer used to make an acrylate polymer. The amount of Compound 6 added was in one case 15% by weight and in the other case 20% by weight.

Two initial tests were run in organic solvents to determine whether the corrosion inhibitor (CI) would release from the bead, and to calibrate the wheel test standards. The following test design was used :

— 15 g bead added to 250 ml solvent

— sample bottle inverted to 10 times, then allowed to settle for 1 hr before sampling

— 3 ml sample removed for analysis after specified exposure time.

Wheel test :

0.5 ml of the above extract sample added to 150 ml of corrosion wheel test fluids.

Tables 3 and 4 show the reference corrosion profiles for standard solutions made up in Mentor (kerosene) and decanol solutions, with standard corrosion curves plotted from these data. At room temperature, no corrosion inhibitor was leached from the beads in Mentor. All extracted samples up to two weeks exposure (end of test) did not provide any corrosion inhibition.

Beads of 15 and 20% activity were extracted with decanol at room temperature and corrosion inhibitor levels were determined by reference back to the standards. Results are presented in Table 5. Extraction was faster from the 20% active beads than 15% active (expected from photographic examination of beads — CI on outer surface). Using the dilution factors (× 300) in these experiments, any concentration above 20 ppm in the wheel test bottle could not be quantified. At these levels the inhibitor had achieved its maximum % protection level. A further dilution to give a total of × 1500 was used in further extraction tests. This allows all extraction levels to be determined during the test up to the maximum of 15000 ppm.

Using these new dilution factors, tests were run in Mentor 28 at 50°C, and a xylene-heptane mixture (50-50) at room temperature. Results are presented in Tables 6 to 8 and show that in Mentor, changing the test temperature has a dramatic effect on rate of release. Inhibitor is released completely from the bead in less than 30 hours at 50°C, whereas no release was observed after 300 hours at ambient temperature. In the xylene-heptane mixture, approximately 40% of the inhibitor had been gradually released after 300 hours. This solvent is clearly more effective at extracting the inhibitor than Mentor. A similar extraction test was run in 3% NaCl brine solution at ambient and 50°C, and no inhibitor was released. These tests carried out using a range of test fluids demonstrate the sensitivity of the release characteristics of the beads to solvent polarity. Beads were exposed to a mixed system of North Sea crude oil and 3% NaCl brine to test structure integrity in field fluids. No physical changes were evident after 60 days at room temperature.

TABLE 3

COMPOUND 6 EXTRACTION RATE TESTS - MENTOR REFERENCES

| CI Concentration in Test Bottle (ppm) | CI Concentration in Extraction Fluid (ppm) | % Protection |
|---|---|---|
| 1 | 300 | - |
| 2 | 600 | 29 |
| 5 | 1500 | 63 |
| 10 | 3000 | 68 |
| 20 | 6000 | 67 |
| 30 | 9000 | 72 |
| 40 | 12000 | 79 |
| 50 | 15000 | 80 |

Test Conditions:

| | |
|---|---|
| Temperature: | 70°C |
| Duration: | 24 hrs |
| Fliuds: | 50-50 Mentor - 3% NaCl brine |
| Corrosives: | Saturated $CO_2$ + 100 ppm $H_2S$ |

## TABLE 4

### COMPOUND 6 EXTRACTION RATE TESTS - DECANOL REFERENCES

| CI Concentration in Test Bottle (ppm) | CI Concentration in Extraction Fluid (ppm) | % Protection |
|---|---|---|
| 1 | 300 | 38 |
| 2 | 600 | 35 |
| 5 | 1500 | 69 |
| 10 | 3000 | 72 |
| 20 | 6000 | 82 |
| 30 | 9000 | 84 |
| 40 | 12000 | 89 |
| 50 | 15000 | 83 |

Test Conditions:

| | |
|---|---|
| Temperature: | 70°C |
| Duration: | 24 hrs |
| Fliuds: | 50-50 Mentor - 3% NaCl brine |
| Corrosives: | Saturated $CO_2$ + 100 ppm $H_2S$ |

TABLE 5

COMPOUND 6 EXTRACTION TEST RESULTS:

AMBIENT TEMPERATURE IN DECANOL

(a) 15% Active Beads

| Exposure Time (hrs) | % Protection | ppm Extracted | % Extracted |
|---|---|---|---|
| 7 | 64 | 1800 | 12 |
| 22 | 78 | 4200 | 28 |
| 28 | 69 | 9000 | 60 |
| 48 | 86 | >9000 | >60 |
| 72 | 82 | >9000 | >60 |
| 144 | - | >9000 | >60 |
| 168 | 82 | >9000 | >60 |
| 199 | 85 | >9000 | >60 |
| 312 | 74 | >9000 | >60 |
| 500 | 86 | >9000 | >60 |

(b) 20% Active Beads

| | | | |
|---|---|---|---|
| 7 | 73 | 3000 | 20 |
| 22 | 83 | 7000 | 47 |
| 28 | 91 | >9000 | >60 |
| 48 | 87 | >9000 | >60 |
| 72 | 72 | >9000 | >60 |
| 144 | 82 | >9000 | >60 |
| 168 | 83 | >9000 | >60 |
| 199 | 84 | >9000 | >60 |
| 216 | 78 | >9000 | >60 |
| 312 | 89 | >9000 | >60 |
| 500 | 87 | >9000 | >60 |

TABLE 6

COMPOUND 6 EXTRACTION TESTS - 50°C MENTOR REFERENCES

| CI Concentration in Test Bottle (ppm) | CI Concentration in Extraction Fluid (ppm) | % Protection |
|---|---|---|
| 1 | 1500 | 11 |
| 2 | 3000 | 30 |
| 3 | 4500 | 26 |
| 4 | 6000 | 40 |
| 5 | 7500 | 55 |
| 6 | 9000 | 64 |
| 8 | 12000 | 63 |
| 10 | 15000 | 71 |

Test Conditions:

| | |
|---|---|
| Temperature: | 70°C |
| Duration: | 24 hrs |
| Fliuds: | 50-50 Mentor - 3% NaCl brine |
| Corrosives: | Saturated $CO_2$ + 100 ppm $H_2S$ |

TABLE 7

COMPOUND 6 EXTRACTION TEST RESULTS:

50°C IN MENTOR (15% ACTIVE BEADS)

| Exposure Time (hrs) | % Protection | ppm Extracted | % Extracted |
|---|---|---|---|
| 6 | 61 | 8000 | 53 |
| 22 | 61 | 8000 | 53 |
| 30 | 71 | 15000 | 100 |
| 48 | (58) | 15000 | 100 |
| 144 | 71 | 15000 | 100 |
| 168 | 81 | 15000 | 100 |
| 199 | 52 | 15000 | 100 |
| 288 | 71 | 15000 | 100 |

TABLE 8

COMPOUND 6 EXTRACTION TEST RESULTS:

AMBIENT TEMPERATURE IN 50-50 XYLENE-HEPTANE

| Exposure Time (hrs) | % Protection | ppm Extracted | % Extracted |
|---|---|---|---|
| 6 | 6 | 1000 | 6.7 |
| 22 | 9 | 1500 | 10 |
| 30 | 11 | 1800 | 12 |
| 48 | 11 | 1800 | 12 |
| 144 | 10 | 1800 | 12 |
| 168 | 29 | 4000 | 27 |
| 288 | (17) | 4000 | 27 |
| 312 | 42 | 6000 | 40 |

Example 3

In this Example Compound 6 of Example 1 was dispersed in colloidal silica as a support, the amount of Compound 6 being about 50 percent by weight based on the weight of colloidal silica.

The release rate was tested by a different method from that used for Examples 1 and 2. A weighed amount of the absorbed silica product (0.8 g) was extracted with Mentor 28 at 120°F and all liquid was collected and replaced hourly. This extraction was continued over two working days to generate 16 extraction data points.

For comparison compound 6 was dispersed in beads by the method described in Example 2 (2.7 g of beads used to give the same amount of Cl active in each test). Wheel test correlation results are presented in Table 9. A large release of Cl active is seen in the first two extractions (2 hours) which rapidly reduces to a level of release of several hundred ppm over the remainder of the test. These figures should be taken as an indication that Cl is being released over the whole test duration, rather than absolute values. Presence of the corrosion inhibitor is further confirmed by visual examination of the extraction fluids which show a haze at room temperature due to the insolubility of Cl active in Mentor at low temperatures.

The silica adsorbed solids were releasing less than 10 ppm of Cl after 16 hours of testing. Extrapolation of the curve suggests a release rate of below 1 ppm after 24 hours. Only 10% of the inhibitor has been extracted at 16 hours. Using the beaded Cl (Example 2), a higher level of Cl is released.

## TABLE 9

## COMPOUND 6 EXTRACTION RATE TESTS - HCP TEST METHOD

### (a) Mentor References

| Test Bottle Concentrations (ppm) | Wheel Test Concentrations (ppm) | % Protection |
|---|---|---|
| 300 | 1.2 | 4 |
| 600 | 2.4 | 4 |
| 1500 | 6 | 59 |
| 3000 | 12 | 82 |
| 6000 | 24 | 85 |
| 9000 | 36 | 88 |
| 12000 | 48 | 88 |
| 15000 | 60 | 87 |

### (b) Extraction Test

| Hours | % Protection | ppm in Extract Fluids |
|---|---|---|
| 1* | 81 | (>3000) |
| 2* | 14 | (5000) |
| 3 | 51 | 1200 |
| 4 | 21 | 800 |
| 5 | 10 | 500 |
| 6 | 6 | 300 |
| 7 | 4 | 300 |
| 8 | 8 | 300 |
| 9 | 12 | 400 |
| 10 | 7 | 300 |
| 11 | 9 | 300 |
| 12 | 6 | 300 |
| 16 | 9 | 300 |

* Includes further dilution factor of x 10.

Example 4

Two propoxylated amido-amines were made by the procedure of Example 1. The first one, Compound 8, was made by the reaction of stearic acid with diethylene triamine in a mole ratio of 2 : 1 followed by the reaction with propylene oxide in a mole ratio of 1 : 1. The second one, Compound 9, was made by the reaction of Compound 8 with propylene oxide in a mole ratio of 4 : 1 so that Compound 9 was derived from 5 moles of propylene oxide per mole of diethylene triamine.

Compounds 8 and 9 were dispersed on an acrylate polymer by the procedure of Example 2 and subjected to corrosion wheel tests. The results are given in Table 10.

TABLE 10

INITIAL CORROSION WHEEL TESTS ON PROPOXYLATED AMIDO-AMINES

| Ref. | Moles P.O. | % Protection at (ppm) 10 | 20 | 100 |
|---|---|---|---|---|
| Compound 8 | 1 | 83 | - | 88 |
| Compound 9 | 5 | 88 | 91 | 89 |

Test Conditions:

| | |
|---|---|
| Temperature: | 70°C |
| Duration: | 24 hrs |
| Fluids: | 50-50 Mentor - 3% NaCl brine |
| Corrosives: | 2500 ppm acetic acid + 100 ppm $H_2S$ |

## Claims

1. A corrosion inhibiting composition comprising a compound or mixture of compounds supported on or dispersed in a support, wherein the compound or at least one of said compounds is a product (X) obtainable by reacting propylene oxide or a butylene oxide with the free amino groups of a product (Y), product (Y) being obtainable by reacting a polyamine with a carboxylic acid, a carboxylic acid anhydride or an ester of a carboxylic acid.

2. A composition according to claim 1 wherein the polyamine from which product (X) is obtainable is one of the formula $H_2N((CH_2)_xNH)yH$ where x and y are integers.

3. A composition according to claim 2 wherein x is between 2 and 6 and y is between 1 and 10.

4. A composition according to any one of claims 1 to 3 wherein the carboxylic acid from which product (X) is obtainable has 10 to 25 carbon atoms per molecule.

5. A composition according to any one of claims 1 to 4 wherein the carboxylic acid from which product (X)

is obtainable is an aliphatic monocarboxylic acid.

6. A composition according to any one of claims 1 to 5 wherein the ratio between propylene oxide or the butylene oxide and the nitrogen in the amine group of product (Y) is between 1 and 10 multiplied by the number of hydrogen atoms attached to amino groups in product (Y).

7. A composition according to any one of the preceding claims wherein the support is silica or alumina.

8. A composition according to any one of claims 1 to 6 wherein the support is a solid polymeric matrix.

9. The use in a hydraulic fracturing operation of a composition as claimed in any of claims 1 to 8.

## Patentansprüche

1. Korrosionsinhibierende Zusammensetzung, umfassend eine auf einem Träger aufgetragene oder in einem Träger dispergierte Verbindung oder Mischung von Verbindungen, worin die Verbindung oder wenigstens eine der Verbindungen ein Produkt (k) ist, das durch Umsetzung von Propylenoxid oder Butylenoxid mit den freien Aminogruppen eines Produktes (Y) erhältlich ist, wobei das Produkt (Y) durch Umsetzung eines Polyamins mit einer Carbonsäure, einem Carbonsäureanhydrid oder einem Ester einer Carbonsäure erhältlich ist.

2. Zusammensetzung nach Anspruch 1, worin das Polyamin, aus dem Produkt (X) erhältlich ist, ein Produkt der Formel $H_2N((CH_2)xNH)_yH$ ist, worin x und y ganze Zahlen sind.

3. Zusammensetzung nach Anspruch 2, worin x zwischen 2 und 6 liegt und y zwischen 1 und 10 liegt.

4. Zusammensetzung nach irgendeinem der Ansprüche 1 bis 3, worin die Carbonsäure, aus der Produkt (X) erhältlich ist, 10 bis 25 Kohlenstoffatome pro Molekül aufweist.

5. Zusammensetzung nach irgendeinem der Ansprüche 1 bis 4, worin die Carbonsäure, aus der Produkt (X) erhältlich ist, eine aliphatische Monocarbonsäure ist.

6. Zusammensetzung nach irgendeinem der Ansprüche 1 bis 5, worin das Verhältnis zwischen Propylenoxid oder Butylenoxid und dem Stickstoff in der Aminogruppe des Produkts (Y) zwischen 1 und 10 liegt, multipliziert mit der Anzahl von Wasserstoffatomen, die an die Aminogruppen in Produkt (Y) gebunden sind.

7. Zusammensetzung nach irgendeinem der vorangehenden Ansprüche, worin der Träger Siliciumoxid oder Aluminiumoxid ist.

8. Zusammensetzung nach irgendeinem der Ansprüche 1 bis 6, worin der Träger eine feste polymere Matrix ist.

9. Verwendung einer Zusammensetzung nach irgendeinem der Ansprüche 1 bis 8 in einem Verfahren zur hydraulischen Rißbildung.

## Revendications

1. Composition inhibitrice de corrosion, comprenant un composé ou mélange de composés fixé sur, ou dispersé dans, un support, dans laquelle le composé, ou au moins un desdits composés, est un produit (X) pouvant être obtenu par réaction d'oxyde de propylène ou d'un oxyde de butylène avec les groupes amino libres d'un produit (Y), produit (Y) qui peut être obtenu par réaction d'une polyamine avec un acide carboxylique, un anhydride d'acide carboxylique ou un ester d'un acide carboxylique.

2. Composition suivant la revendication 1, dans laquelle la polyamine, à partir de laquelle le produit (X) peut être obtenu, est une polyamine de formule $H_2N((CH_2)_xNH)_yH$ dans laquelle x et y représentent des nombres entiers.

3. Composition suivant la revendication 2, dans laquelle x a une valeur de 2 à 6 et y a une valeur de 1 à 10.

4. Composition suivant l'une quelconque des revendications 1 à 3, dans laquelle l'acide carboxylique à partir duquel le produit (X) peut être obtenu possède 10 à 25 atomes de carbone par molécule.

5. Composition suivant l'une quelconque des revendications 1 à 4, dans laquelle l'acide carboxylique à partir duquel le produit (X) peut être obtenu est un acide monocarboxylique aliphatique.

6. Composition suivant l'une quelconque des revendications 1 à 5, dans laquelle le rapport entre l'oxyde de propylène ou l'oxyde de butylène et l'azote dans les groupes amino du produit (Y) a une valeur de 1 à 10 multipliée par le nombre d'atomes d'hydrogène fixés aux groupes amino dans le produit (Y).

7. Composition suivant l'une quelconque des revendications précédentes, dans laquelle le support consiste en silice ou en alumine.

8. Composition suivant l'une quelconque des revendications 1 à 6, dans laquelle le support est une matrice polymérique solide.

9. Utilisation dans une opération de fracturation hydraulique d'une composition suivant l'une quelconque

des revendications 1 à 8.